# DEMANDE DE BREVET EUROPEEN

(11) **EP 4 803 342 A1**
(43) Date de publication de la demande: **09.09.2026**
(21) Numéro de dépôt: 26154412.6
(22) Date de dépôt: 27.01.2026
(51) Int. Cl.: B60K 35/21, B60K 35/22, B60K 35/232, B60K 35/233, B60K 35/29, B60K 35/65, B60K 35/81, G02B 27/01

(54) **PROCÉDÉ ET DISPOSITIF DE CONTRÔLE D'UN SYSTÈME DE VISION TÊTE HAUTE D'UN VÉHICULE**

(30) Priorité: 03.03.2025 FR 2502102
(71) Demandeur: Stellantis Auto SAS, 78300 Poissy (FR)
(72) Inventeur: POITEVIN, THOMAS, 91620 NOZAY (FR); BAYARD, LOÏC, 91470 FORGES LES BAINS (FR)
(74) Mandataire: ESIP

(57) **Abrégé**

La présente invention concerne un procédé et un dispositif de contrôle d'un système de vision tête-haute, dit système VTH, d'un véhicule, le système VTH étant configuré pour fonctionner selon une pluralité de modes d'affichage comprenant un mode d'affichage monoplan et un mode d'affichage multiplans, le véhicule comprenant un écran tactile (13). A cet effet, un témoin (31) représentatif du système VTH est affiché sur l'écran tactile (13). Des premières données représentatives d'un appui tactile (301) sur le témoin (31) sont reçues. Suivant la réception des premières données, des deuxièmes données représentatives d'une commande de transition depuis un mode d'affichage courant vers un mode d'affichage cible sont transmises à destination d'un contrôleur du système VTH, la commande de transition étant fonction du mode d'affichage courant, le mode d'affichage courant et le mode d'affichage cible appartenant à la pluralité de modes d'affichage.

## Description

### Domaine technique

L'invention concerne les procédés et dispositifs de contrôle d'un système de vision tête haute, dit système VTH, d'un véhicule, notamment mais non exclusivement un véhicule automobile. L'invention concerne également un procédé et un dispositif de contrôle d'un mode d'affichage d'un système VTH d'un véhicule.

### Arrière-plan technologique

Les véhicules contemporains embarquent pour certains d'entre eux plusieurs écrans pour afficher des informations utiles au conducteur pour la conduite du véhicule ainsi que des informations de confort, telles que par exemple des informations pour interagir avec le système d'infodivertissement, aussi appelé système IVI (de l'anglais « In-Vehicle Infotainment » ou en français « Infodivertissement embarqué »), du véhicule.

Il est également connu d'équiper certains véhicules d'un système de vision tête haute (VTH), aussi appelé système d'affichage tête-haute, qui permet d'afficher des informations utiles pour la conduite du véhicule à la hauteur du regard du conducteur, par exemple sur une lamelle transparente ou semi-transparente arrangée sur la planche de bord derrière le volant. Un tel dispositif d'affichage tête-haute est par exemple décrit dans le document WO2013/189808 A publié le 27 décembre 2013. Les systèmes VTH équipant les véhicules correspondaient dans un premier temps à des systèmes VTH monoplan, c'est-à-dire des systèmes configurés pour afficher des informations sur un seul plan à une profondeur donnée, en général après le parebrise, avant qu'on ne voit apparaître des véhicules équipés de systèmes VTH multiplans, c'est-à-dire des systèmes configurés pour permettre l'affichage des informations utiles pour la conduite du véhicule sur différents plans image situés à différentes profondeurs depuis un point de vue donné.

Cette nouvelle technologie de système VTH multiplans n'est cependant pas toujours acceptée par les utilisateurs de véhicule qui préfèrent conserver les systèmes VTH monoplan. Les constructeurs automobiles ont ainsi prévu des systèmes VTH configurés pour fonctionner en mode monoplan et en mode multiplans, le passage d'un mode à l'autre étant contrôlable le plus souvent via un sous-menu d'une interface homme machine (IHM) graphique du véhicule affiché sur un écran du véhicule. Ce sous-menu correspond par exemple à une page de l'IHM dédié au contrôle de différents paramètres du système VTH et est généralement accessible via l'écran tactile du véhicule en naviguant dans différents menus de l'IHM et en effectuant plusieurs clics sur l'interface tactile.

L'attention du conducteur peut ainsi être perturbée lorsque le conducteur doit rechercher comment contrôler ce système VTH, ce qui présente un risque de sécurité pour le véhicule, ses passagers et les autres usagers de la route lorsque le conducteur souhaite par exemple passer d'un mode à un autre.

### Résumé de la présente invention

Un objet de la présente invention est de résoudre au moins l'un des problèmes de l'arrière-plan technologique décrit précédemment.

Un objet de la présente invention est par exemple d'améliorer le contrôle d'un système de vision tête haute d'un véhicule.

Un autre objet de la présente invention est d'améliorer la sécurité d'un véhicule.

Selon un premier aspect, la présente invention concerne un procédé de contrôle d'un système de vision tête haute, dit système VTH, d'un véhicule, le système VTH étant configuré pour fonctionner selon une pluralité de modes d'affichage comprenant un mode d'affichage monoplan et un mode d'affichage multiplans, le véhicule comprenant un écran tactile, le procédé étant mis en œuvre par au moins un processeur et comprenant les étapes suivantes :
- contrôle d'affichage d'un témoin représentatif du système VTH sur l'écran tactile ;
- réception de premières données représentatives d'un appui tactile sur le témoin ;
- transmission de deuxièmes données représentatives d'une commande de transition depuis un mode d'affichage courant vers un mode d'affichage cible à destination d'un contrôleur dudit système VTH, la commande de transition étant fonction du mode d'affichage courant du système VTH, le mode d'affichage courant et le mode d'affichage cible appartenant à la pluralité de modes d'affichage, la transmission des deuxièmes données étant déclenchée par la réception des premières données.

L'utilisation directe du témoin associé au système VTH pour commander le passage du mode d'affichage monoplan au mode d'affichage multiplans, ou inversement du mode d'affichage multiplans au mode d'affichage monoplan, permet au conducteur de commander le mode d'affichage directement depuis l'interface tactile de l'écran du véhicule, ce qui permet de se passer de tout autre organe de commande physique et évite de devoir rechercher le bouton de commande dans le sous-menu ad hoc de l'IHM graphique du véhicule. La commande du système VTH est ainsi simplifiée et plus intuitive que celle via un sous menu ou un organe de commande physique dans l'habitacle, ce qui permet d'améliorer l'attention du conducteur sur la route et la sécurité du véhicule et des autres usagers de la route. La centralisation des contrôles sur l'écran tactile permet en outre de s'affranchir de tout autre organe de commande physique pour le contrôle du système VTH, notamment du mode d'affichage du système VTH, ce qui réduit les coûts de conception et de fabrication des véhicules.

Selon une variante, le mode d'affichage cible correspond au mode d'affichage multiplans lorsque le mode d'affichage courant correspond au mode d'affichage monoplan, et le mode d'affichage cible correspond au mode d'affichage monoplan lorsque le mode d'affichage courant correspond au mode d'affichage multiplans.

Selon une variante supplémentaire, l'appui tactile correspond à un appui tactile d'une durée inférieure à un seuil, dit appui tactile court, ou à un appui tactile d'une durée supérieure au seuil, dit appui tactile long, les deuxièmes données comprenant une information représentative de la durée de l'appui tactile lorsque l'appui tactile correspond à l'appui tactile long.

Selon encore une variante, le procédé comprend en outre une étape de contrôle du système VTH en fonction des deuxièmes données pour passer du mode d'affichage courant au mode d'affichage cible.

Selon une variante additionnelle, le contrôle du système VTH comprend un contrôle d'un nombre de plans image disponibles en mode d'affichage multiplans lorsque le mode d'affichage courant correspond au mode d'affichage monoplan et le mode d'affichage cible correspond au mode d'affichage multiplans et lorsque l'appui tactile correspond à l'appui tactile long, le nombre de plans image disponibles étant fonction de l'information représentative de la durée de l'appui tactile.

Selon une variante supplémentaire, le procédé comprend en outre une étape de contrôle d'une représentation graphique du témoin déclenchée par la réception des premières données pour passer d'une représentation graphique courante associée au mode d'affichage courant à une représentation graphique cible associée au mode d'affichage cible, la représentation graphique courante et la représentation graphique cible appartenant à un ensemble de représentations graphiques comprenant une première représentation graphique associée au mode d'affichage monoplan et une deuxième représentation graphique associée au mode d'affichage multiplans.

Selon un deuxième aspect, la présente invention concerne un dispositif de contrôle d'un système de vision tête haute d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 5 annexées, sur lesquelles :
[Fig. 1] illustre schématiquement une partie d'un habitacle d'un véhicule embarquant un système de vision tête-haute, selon un exemple de réalisation particulier de la présente invention, selon un exemple de réalisation particulier de la présente invention ;
[Fig. 2] illustre schématiquement le système de vision tête-haute du véhicule de la figure 1, selon un premier exemple de réalisation particulier et non limitatif de la présente invention ;
[Fig. 3] illustre schématiquement un contenu graphique affiché sur un écran tactile du véhicule de la figure 1, selon un premier exemple de réalisation particulier et non limitatif de la présente invention ;
[Fig. 4] illustre un dispositif configuré pour contrôler le système de vision tête haute du véhicule de la figure 1, selon un exemple de réalisation particulier et non limitatif de la présente invention.
[Fig. 5] illustre un organigramme des différentes étapes d'un procédé de contrôle du système de vision tête haute du véhicule de la figure 1, selon un exemple de réalisation particulier et non limitatif de la présente invention.

### Description des exemples de réalisation

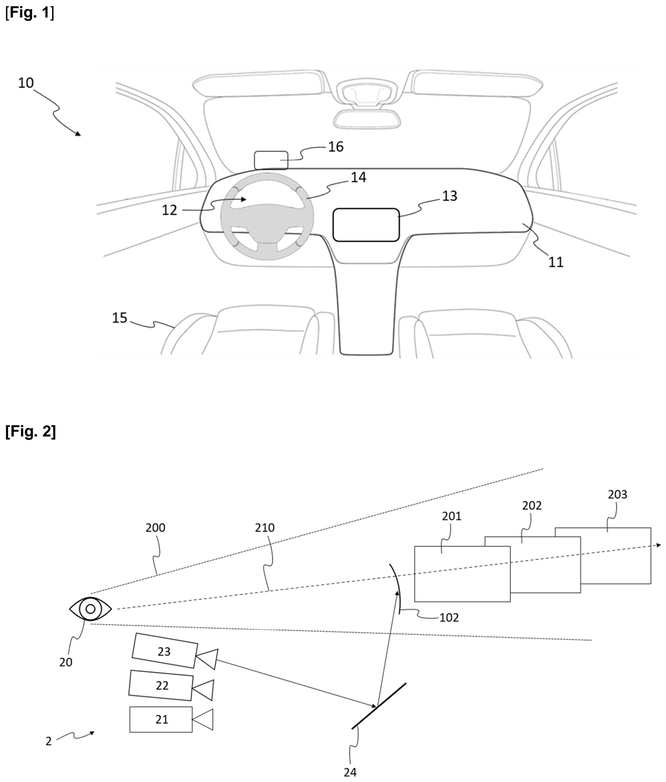

Un procédé et un dispositif de contrôle d'un système de vision tête haute multiplans, dit système VTH multiplans, d'un véhicule vont maintenant être décrits dans ce qui va suivre en référence conjointement aux figures 1 à 5. Des mêmes éléments sont identifiés avec des mêmes signes de référence tout au long de la description qui va suivre.

Les termes « premier(s) », « deuxième(s) » (ou « pemière(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

Selon un exemple particulier et non limitatif de réalisation de la présente invention, le contrôle d'un système de vision tête haute d'un véhicule, appelé système VTH par la suite, est mis en œuvre par un ou plusieurs calculateurs du véhicule, notamment par un ou plusieurs processeurs de ce ou ces calculateurs. Le véhicule embarque en outre un écran à interface tactile, dit écran tactile, contrôlé par un calculateur, par exemple le calculateur du système d'infodivertissement du véhicule, dit calculateur IVI (de l'anglais « In-Vehicle Infotainment » ou en français « Infodivertissement embarqué »). Le système VTH est configuré pour fonctionner selon une pluralité de modes d'affichage comprenant un mode d'affichage monoplan et un mode d'affichage multiplans. Le système VTH correspond par exemple à un système VTH multiplans configuré pour ne projeter des informations que sur un seul plan parmi la pluralité de plans image disponibles dans sa configuration par défaut.

A cet effet, l'affichage d'un témoin représentatif du système VTH est contrôlé par le calculateur IVI pour que ce témoin soit affiché sur l'écran tactile du véhicule. Des premières données représentatives d'un appui tactile sur le témoin sont reçues de l'interface tactile lorsqu'un utilisateur effectue un appui tactile sur l'écran tactile à l'endroit d'affichage du témoin. Suivant la réception des premières données, le calculateur transmet des deuxièmes données représentatives d'une commande de contrôle du système VTH à destination d'un contrôleur, par exemple un calculateur, du système VTH, cette commande de contrôle correspondant à une commande de transition depuis un mode d'affichage courant vers un mode d'affichage cible. Le mode d'affichage courant et le mode d'affichage cible appartiennent à la pluralité de modes d'affichage du système VTH, c'est-à-dire que le mode d'affichage cible correspond au mode d'affichage multiplans lorsque le mode d'affichage courant correspond au mode d'affichage monoplan, et le mode d'affichage cible correspond au mode d'affichage monoplan lorsque le mode d'affichage courant correspond au mode d'affichage multiplans.

La figure 1 illustre schématiquement une partie d'un habitacle d'un véhicule 10, selon un exemple de réalisation particulier et non limitatif de la présente invention.

Le véhicule 10 correspond par exemple à un véhicule à moteur thermique, à moteur(s) électrique(s) ou encore un véhicule hybride avec un moteur thermique et un ou plusieurs moteurs électriques. Le véhicule 10 correspond ainsi par exemple à un véhicule terrestre, par exemple une automobile, un camion, un car.

Le véhicule 10 embarque un système d'affichage comprenant un écran à interface tactile, dit écran tactile 13, et un calculateur configuré pour contrôler l'affichage de contenu(s) d'une IHM graphique sur l'écran tactile 13. Le calculateur correspond par exemple au calculateur du système d'infodivertissement, dit calculateur IVI (de l'anglais « In-Vehicle Infotainment » ou en français « Infodivertissement embarqué ») du véhicule 10.

L'écran tactile 13 correspond par exemple à un écran de type LCD (de l'anglais « Liquid Crystal Display » ou en français « Affichage à cristaux liquides »), par exemple de type de type TFT (de l'anglais « Thin-Film Transistor » ou en français « Transistor en film mince »), ou OLED (de l'anglais « Organic Light-Emitting Diode » ou en français « Diode électroluminescente organique »).

L'écran tactile 13 est configuré pour afficher des contenus à destination du conducteur et des passagers du véhicule 10. L'écran tactile 13 est également configuré pour permettre au conducteur et/ou aux passagers du véhicule d'interagir avec un ou plusieurs systèmes embarqués dans le véhicule via une interface homme machine (IHM) affichée sur l'écran tactile 13. Par exemple, l'écran 13 est configuré pour interagir avec le système IVI et/ou un ensemble de systèmes d'aide à la conduite tels qu'un système de navigation, un système de régulation de vitesse ou d'autres systèmes embarqués tels que le système de climatisation par exemple.

Selon un mode de réalisation particulier, le système d'affichage comprend un ou plusieurs autres écrans, par exemple un écran d'affichage appelé combiné ou tableau de bord et généralement arrangé dans une zone 12 derrière le volant 14 dans la planche de bord 11.

Selon un mode de réalisation particulier, le système d'affichage comprenant l'écran tactile 13 est par exemple prévu ou configuré pour réduire le nombre d'écrans présents dans le véhicule 10, permettant par exemple de supprimer le ou les écrans d'affichage appelés combiné ou tableau de bord.

Le véhicule 10 embarque avantageusement un système de vision tête-haute, dit système VTH par la suite (aussi appelé système HUD (de l'anglais « Head Up Display » ou en français « Affichage Tête Haute »)). Le système VTH appartient par exemple au système d'affichage du véhicule 10, c'est-à-dire qu'un même calculateur ou groupe de calculateurs du système d'affichage contrôle l'écran tactile 13 et le système VTH. Selon une variante de réalisation, l'écran tactile 13 et le système VTH sont chacun contrôlés par un calculateur différent.

Le système VTH correspond par exemple à un système VTH multiplans configurés pour afficher au choix des images ou contenus graphiques sur différents plans image ou sur un unique plan image. Le système VTH multiplans est ainsi configuré pour afficher un ensemble d'images à différentes distances ou différentes profondeurs d'un point de vue correspondant au conducteur du véhicule 10 assis dans le siège conducteur 15, c'est-à-dire sur différents plans image, une profondeur ou distance déterminée vis-à-vis du point de vue étant associée à chaque plan image. Chaque image comprend un ensemble d'objets graphiques affichés par projection sur une surface transparente ou semi-transparente.

La surface transparente ou semi-transparente correspond par exemple à une lame ou lamelle 16 arrangée sur la planche de bord du véhicule 10, par exemple au-dessus et en arrière du volant par rapport à un point de vue correspondant au point de vue selon lequel un conducteur est censé regarder la route devant lui lorsqu'il conduit le véhicule 10 assis dans le siège conducteur 15. Selon un autre exemple, la surface transparente ou semi-transparente correspond à une zone déterminée du pare-brise 17 sur laquelle est projeté l'ensemble d'images.

Le système VTH correspond par exemple à un système dit à réalité augmentée, dite AR (de l'anglais « Augmented Reality »), configuré pour incruster des objets virtuels dans le champ de vision du conducteur, par exemple sur la lamelle 16 ou le pare-brise 17 du véhicule 10, de manière à superposer les objets virtuels sur la scène routière réelle. La projection des images de l'objet graphique est par exemple contrôlée par un ou plusieurs calculateurs du réseau embarqué du véhicule 10, par exemple par le calculateur du système d'infodivertissement, dit calculateur IVI (de l'anglais « In-Vehicle Infotainment » ou en français « Infodivertissement embarqué ») du véhicule 10.

Le système VTH multiplans comprend un ou plusieurs projecteurs d'image, par exemple encastrés dans un logement prévu dans la planche de bord 11 du véhicule 10, associés à un ou plusieurs miroirs.

Le système VTH est configuré pour fonctionner selon plusieurs modes d'affichage comprenant un mode d'affichage monoplan et un mode d'affichage multiplans. Lorsque le mode d'affichage courant du système VTH correspond au mode d'affichage monoplan, l'ensemble des images et contenus graphiques associés sont projetés sur la lamelle 16 ou le pare-brise 17 de manière à apparaître sur un unique plan image, c'est-à-dire à une unique distance ou profondeur du point de vue selon lequel le conducteur est censé regarder la route devant lui lorsqu'il conduit le véhicule 10 assis dans le siège conducteur 15. Lorsque le mode d'affichage courant du système VTH correspond au mode d'affichage multiplans, l'ensemble des images et contenus graphiques associés sont projetés sur la lamelle 16 ou le pare-brise 17 de manière à être répartis sur plusieurs plans image, c'est-à-dire à plusieurs distances ou profondeurs du point de vue. La répartition de l'affichage des images et contenus graphiques associés sur les différents plans image est par exemple fonction du type du contenu graphique, du système générant le contenu graphique à projeter, d'indicateurs d'importance ou de criticité associés aux contenus graphiques à projeter, etc.

Un exemple d'un tel système VTH est décrit avec plus de détails en regard de la figure 2.

Les différents systèmes du véhicule 10, notamment le système VTH et les différents systèmes embarqués du véhicule 10, sont chacun contrôlés par un ou plusieurs calculateurs. Ces calculateurs forment par exemple une architecture multiplexée pour la réalisation de différents services utiles pour le bon fonctionnement du véhicule et pour assister le conducteur et/ou les passagers du véhicule dans le contrôle du véhicule 10. Les calculateurs communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458), LIN (de l'anglais « Local Interconnect Network » ou en français « Réseau interconnecté local ») ou Ethernet (selon la norme ISO/IEC 802-3).

La figure 2 illustre un système de vision tête-haute 2 du véhicule 10, selon un exemple de réalisation particulier et non-limitatif de l'invention.

Le système VTH 2 correspond à un système VTH multiplans adapté pour l'affichage de différents contenus graphiques dans différents plans image 201, 202, 203, tel que décrit précédemment en regard de la figure 1, lorsque le mode d'affichage courant est le mode d'affichage multiplans. Lorsque le mode d'affichage courant correspond au mode d'affichage monoplan, l'affichage des différents contenus graphiques est obtenu dans un unique plan image, par exemple le plan image 201 le plus proche du point de vue 20 du conducteur.

La figure 2 illustre certains éléments formant le système VTH 2. Pour des raisons de clarté, les échelles des éléments ainsi que les différences d'échelles entre les différents éléments ne sont pas respectées. Pour les mêmes raisons de clarté, les éléments sont représentés selon différentes respectives.

Selon l'exemple de la figure 2, le nombre de plans images obtenus par le système VTH 2 est égal à 3. Bien entendu, l'invention ne se limite pas à un tel système VTH multiplans mais s'étend à tout système VTH multiplans configuré pour l'affichage de contenus graphiques dans 2 ou plus plans image.

Selon un exemple de réalisation, le système VTH 2 est configuré pour afficher des images représentatives des contenus graphiques sur un nombre défini de plans images, par exemple 2, 3, 5 ou 10 plans image, chaque plan image étant à une profondeur ou distance déterminée vis-à-vis du point de vue 20 du conducteur du véhicule 10.

Selon un autre exemple de réalisation, le système VTH 2 est configuré pour afficher les images représentatives des contenus graphiques sur une multitude de plans images dont la distance vis-à-vis du point de vue 20 du conducteur du véhicule 10 est contrôlable pour varier de manière continue entre par exemple une distance ou profondeur minimale et une distance ou profondeur maximale.

Le système VTH 2 selon l'exemple particulier de la figure 2 comprend 3 projecteurs d'image 21, 22, 23 chacun configuré pour émettre un faisceau lumineux selon une direction principale d'émission dirigée vers un miroir 21. Les informations d'image transportées par chaque faisceau lumineux varient temporellement selon l'image de la séquence à projeter sur la lamelle 102 (ou selon une variante sur le pare-brise 101) après réflexion sur le miroir 24. Chaque projecteur d'image 21, 22, 23 correspond par exemple à un projecteur mono-focale, par exemple du type « émissif », le projecteur correspondant par exemple à un scanner laser comprenant au moins une diode laser, par exemple trois diodes laser pour générer trois couleurs différentes, par exemple RGB (une diode par couleur RGB (de l'anglais « Red, Green, Blue » ou en français « rouge, vert, bleu »)).

Chaque projecteur d'image 21, 22, 23 est orienté selon un angle différent vis-à-vis de la surface réfléchissante du miroir 24 pour projeter des contenus graphiques sur les différents plan image 201, 202, 203. Par exemple, le premier projecteur d'image 21 est orienté selon un premier angle par rapport au miroir 24 pour que le contenu graphique projeté par ce premier projecteur 21 soit affiché dans le premier plan image 201, le deuxième projecteur d'image 22 est orienté selon un deuxième angle par rapport au miroir 24 pour que le contenu graphique projeté par ce deuxième projecteur 22 soit affiché dans le deuxième plan image 202 et le troisième projecteur d'image 23 est orienté selon un troisième angle par rapport au miroir 24 pour que le contenu graphique projeté par ce troisième projecteur 23 soit affiché dans le troisième plan image 203.

En mode d'affichage multiplans, le système VTH est contrôlé pour utiliser plusieurs projecteurs d'image parmi les 3 projecteur d'image 21, 22, 23 pour afficher les images sur différents plans image. En mode d'affichage monoplan, le système VTH est contrôlé pour utiliser un unique et même projecteur parmi les 3 projecteur d'image 21, 22, 23 pour afficher les images sur un unique et même plan image.

Selon une variante, le système VTH 2 comprend 3 projecteurs d'image 21, 22, 23 et 3 miroirs, chaque projecteur d'image 21, 22, 23 projetant un faisceau lumineux vers un miroir différent de l'ensemble de 3 miroirs, chacun des miroirs étant orienté pour réfléchir le faisceau lumineux reçu vers la surface transparente ou semi-transparente 101 ou 102 et afficher un contenu graphique associé dans un plan image différent de l'ensemble de plans image 201, 202, 203.

Selon une autre variante, le système VTH 2 comprend un seul projecteur d'image associé à 3 miroirs pour afficher différents contenus graphiques dans les 3 plans image 201, 202 et 203. En mode d'affichage multiplans, le système VTH est contrôlé pour utiliser plusieurs miroirs pour afficher les images sur différents plans image. En mode d'affichage monoplan, le système VTH est contrôlé pour utiliser un unique et même miroir pour afficher les images sur un unique et même plan image.

Selon une autre variante, le système VTH multiplans comprend un seul projecteur d'image associé à un ou plusieurs miroirs dont l'orientation vis-à-vis du projecteur d'image est contrôlable. A cet effet, le ou les miroirs sont montés sur un arbre rotatif d'un moteur électrique pour contrôler l'orientation du miroir. Selon un autre exemple, le projecteur est contrôlable pour modifier son orientation vis-à-vis du ou des miroirs. Ces variantes de réalisation permettent d'obtenir une multitude de plans image selon des distances ou profondeurs vis-à-vis du point de vue du conducteur du véhicule 10 ajustables de manière continue sur un intervalle de distances ou profondeurs déterminé, c'est-à-dire entre une distance ou profondeur minimale et une distance ou profondeur maximale.

Selon un exemple de réalisation particulier, les projecteurs d'image 21, 22, 23 sont agencés de manière que les plans image 201, 202, 203 associés à chaque projecteur 21, 22, 23, respectivement, soient alignés selon une direction principale 210 d'affichage des contenus graphiques projetés par les projecteurs 21, 22, 23 dans le champ de vision 200 associé au point de vue 20 selon lequel ces contenus graphiques sont vus par le conducteur. Les contenus graphiques ou images affichées dans chaque plan image 201, 202, 203 se superposent visuellement, seule la profondeur (c'est-à-dire la distance entre le plan image et le point de vue 20) variant selon le plan image 201, 202, 203 lorsque le point de vue 20 ne bouge pas.

L'architecture du système VTH multiplans ne se limite pas aux exemples décrits précédemment mais s'étend à toute architecture connue de l'homme du métier, par exemple à une architecture comprenant un projecteur laser, un diffuseur et un combineur holographique tel que décrit dans le document intitulé « A multi-plane augmented reality head-up display system based on volume holographic optical elements with large area », de Zhenlv Lv, Juan Liu and Liangfa Xu, publié en août 2021 dans IEEE Photonics Journal.

Un processus de contrôle d'un système VTH tel que le système VTH 2 pour l'affichage de contenus graphiques sur différents plans image tels que les plans image 201, 202, 203, ou sur un unique plan image tel que le plan image 201, 202 ou 203, est avantageusement mis en œuvre par un ou plusieurs processeurs, par exemple par un ou plusieurs processeurs d'un ou plusieurs calculateurs du véhicule 10, par exemple le calculateur IVI du véhicule 10 (en combinaison avec le calculateur contrôlant le système VTH selon une variante, par exemple lorsque le système VTH est contrôlé par un calculateur différent de celui qui contrôle l'écran tactile 13).

Dans une première opération du processus, l'affichage d'un témoin représentatif du système VTH 2 est contrôlé de telle manière que le témoin soit affiché sur l'écran tactile 13. Le témoin est affiché dans un contenu déterminé d'une interface homme-machine, dite IHM, lequel contenu est affiché sur l'écran tactile 13.

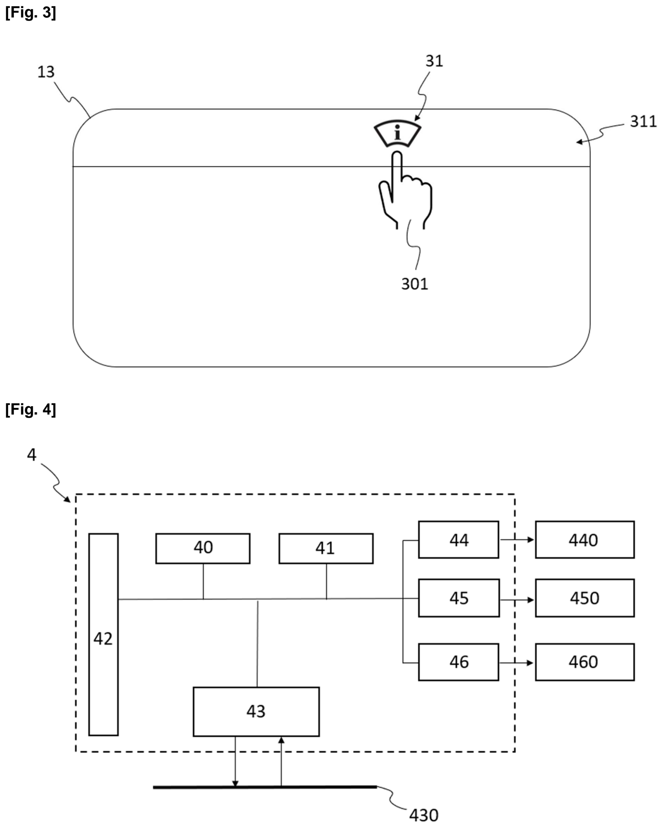

Tel qu'illustré sur la figure 3 selon un exemple de réalisation particulier, Le témoin 31 est par exemple affiché dans une zone 311 correspondant à une bande supérieure de l'écran. La zone 311 correspond par exemple à une zone connue sous le nom de barre d'état, laquelle est prévue pour l'affichage d'un ensemble de témoins et d'informations qui restent affichées quel que soit le contenu affiché dans le reste de l'écran tactile 13. Les témoins affichés dans la zone 311 comprennent par exemple d'autres témoins de connexion sans fil (par exemple de réseaux locaux sans fil tels que Wifi^{®} ou Bluetooth^{®}) et les informations affichées comprennent par exemple l'heure, la température extérieure, des informations sur le système de climatisation du véhicule 10, etc.

Le contenu affiché dans le reste de l'écran tactile 13 comprend quant à lui par exemple un ensemble d'informations utiles au conducteur pour assurer le contrôle et la supervision du véhicule 10. L'ensemble d'informations comprend par exemple la vitesse instantanée du véhicule 10 lorsque ce dernier est dans une phase de roulage ou de circulation, c'est-à-dire en mouvement, entrainé par le moteur du véhicule 10, un compte-tours, exemple l'autonomie restante (exprimée par exemple en kms), la distance parcourue, un volume ou niveau de carburant restant dans le réservoir lorsque le véhicule 10 comprend un moteur thermique, le niveau de charge de la batterie de traction lorsque le véhicule 10 embarque une batterie de traction, etc.

Selon une variante de réalisation, le témoin 311 est affichée dans une zone de l'écran tactile autre que la zone 311, par exemple dans une zone formée en bas de l'écran et correspondant par exemple à une bande inférieure.

Le témoin 31 correspond à un objet graphique, une icône ou un pictogramme déterminé. Cet objet graphique représente par exemple un pare-brise ou une lame de projection avec un « i » à l'intérieur pour représenter le mot « information ».

Selon un mode de réalisation particulier, la représentation graphique du témoin 31 varie selon le mode d'affichage courant activé pour le système VTH 2, c'est-à-dire selon que le mode d'affichage courant correspond au mode d'affiche monoplan ou au mode d'affichage multiplans.

La représentation graphique que peut prendre le témoin appartient ainsi par exemple à un ensemble de représentations graphiques comprenant une première représentation graphique associée au mode d'affichage monoplan et une deuxième représentation graphique associée au mode d'affichage multiplans.

Le changement de représentation graphique est par exemple obtenu en contrôlant un ou plusieurs paramètres d'affichage du témoin 31, par exemple le témoin 31 selon la première représentation graphique est affiché avec une première couleur déterminée (par exemple en gris ou orange) et le témoin 31 selon la deuxième représentation graphique est affiché avec une deuxième couleur déterminée (par exemple en vert), différente de la première couleur déterminée.

Selon un autre exemple, le changement de représentation graphique est obtenu par modification du pictogramme associé au témoin 31. Par exemple, le témoin selon la première représentation graphique est affiché sous la forme d'un premier pictogramme (correspondant par exemple à celui illustré sur la figure 3) et le témoin selon la deuxième représentation graphique est affiché sous la forme d'un deuxième pictogramme différent du premier pictogramme (correspondant par exemple à une superposition avec décalage et en relief de plusieurs objet graphiques représentant chacun le pare-brise ou la lame de projection).

Un contrôle d'affichage d'un témoin, d'un contenu graphique ou de tout objet graphique (texte, pictogramme, icône, etc.) comprend un rendu du contenu graphique ou de l'objet graphique, un tel rendu correspondant à un ensemble d'opérations effectuées par un ou plusieurs processeurs sur les pixels d'une ou plusieurs images du contenu graphique à afficher sur l'écran 13. Par exemple, le rendu consiste à associer à un ensemble de pixels d'une image des données de pixels (par exemple des données de couleurs exprimées dans un espace de type RGB (de l'anglais « Red, Green, Blue » ou en français « rouge, vert, bleu »)) associés à chaque objet graphique.

Le contrôle d'affichage du témoin comprend ainsi la transmission de signaux de contrôle à destination de l'écran tactile 13 pour modifier les valeurs associées aux pixels de l'écran tactile 13 à l'endroit prévu pour afficher le témoin 31 (ou tout objet graphique).

L'affichage du témoin 31 est par exemple déclenché par la réception de données du contrôleur du système VTH lorsque le système VTH est activé, par exemple suivant une commande d'activation du conducteur du véhicule 10. Selon une variante, l'activation du système VTH est mise en œuvre par défaut au démarrage du véhicule 10 et le témoin 31 s'affiche automatiquement sur l'écran tactile 13 suivant le démarrage du véhicule 10.

Dans une deuxième opération du processus, des premières données représentatives d'un appui tactile 301 sur le témoin 31 sont reçues, suivant un appui tactile 301 d'un utilisateur (par exemple le conducteur du véhicule 10) sur le témoin 31.

Un appui tactile sur le témoin envoie une information au calculateur IVI pour que ce dernier mette en œuvre une ou plusieurs fonctions associées à la commande correspondant à l'appui tactile.

Les premières données représentatives de l'appui tactile sont par exemple reçues via un ou plusieurs bus de données reliant l'interface tactile de l'écran tactile 13 (ou un calculateur contrôlant une telle interface tactile le cas échéant) et le calculateur IVI.

L'appui tactile correspond à un appui tactile court ou bref selon lequel la durée d'appui sur le témoin 31 est inférieure à une durée seuil (la durée seuil étant par exemple égale à 500 ou 1000 ms). Selon une variante, l'appui tactile correspond à un appui tactile long selon lequel la durée d'appui sur le témoin 31 est supérieure à la durée seuil (par exemple égale à 500 ou 1000 ms).

Dans une troisième opération du processus, le calculateur IVI transmet des deuxièmes données représentatives d'une commande de transition depuis un mode d'affichage courant vers un mode d'affichage cible à destination d'un contrôleur dudit système VTH. Le contrôleur correspond par exemple à un calculateur lorsque ce dernier est différent du système IVI et/ou à une unité de contrôle (physique ou logique) contrôlant un ou plusieurs éléments du système VTH 2, par exemple le ou les projecteurs et/ou le ou les miroirs.

La commande de transition est fonction du mode d'affichage courant du système VTH 2, c'est-à-dire du mode d'affichage activé pour le système VTH (c'est-à-dire le mode d'affichage monoplan ou le mode d'affichage multiplans) lorsque l'appui tactile 301 est effectué sur le témoin 31.

Le mode d'affichage courant et le mode d'affichage cible appartiennent à la pluralité de modes d'affichage que peut prendre le système VTH 2, c'est-à-dire que le mode d'affichage courant correspond à un parmi le mode d'affichage monoplan et le mode d'affichage multiplans et le mode d'affichage cible correspond à l'autre parmi le mode d'affichage monoplan et le mode d'affichage multiplans.

Ainsi, le mode d'affichage cible correspond au mode d'affichage multiplans lorsque le mode d'affichage courant correspond au mode d'affichage monoplan (et la commande de transition est une commande pour que le système VTH passe du mode d'affichage monoplan au mode d'affichage multiplans). Le mode d'affichage cible correspond au mode d'affichage monoplan lorsque le mode d'affichage courant correspond au mode d'affichage multiplans (et la commande de transition est une commande pour que le système VTH passe du mode d'affichage monoplan au mode d'affichage multiplans).

La transmission des deuxièmes données est déclenchée par la réception des premières données.

Un appui tactile court 301 sur le témoin permet de déclencher le passage du mode d'affichage courant au mode d'affichage cible, que le mode d'affichage courant corresponde au mode d'affichage monoplan ou au mode d'affichage multiplans.

Selon un mode de réalisation particulier, un appui tactile long 301 sur le témoin 31 lorsque le mode d'affichage courant correspond au mode d'affichage multiplans déclenche un contrôle du système VTH 2 pour que ce dernier passe du mode d'affichage monoplan au mode d'affichage multiplans avec un nombre de plans image disponibles, c'est-à-dire susceptibles de recevoir un contenu graphique à afficher, qui dépend de la durée de l'appui tactile long par le conducteur sur l'écran tactile 13, c'est à dire de la durée pendant laquelle le conducteur (ou le passager avant) appuie sur l'interface tactile à l'endroit du témoin 31 pour requérir la transition depuis le mode d'affichage courant (c'est-à-dire le mode d'affichage monoplan) et le mode d'affichage cible (c'est-à-dire le mode d'affichage multiplans). Selon ce mode de réalisation, un appui tactile court déclenche le passage au mode d'affichage multiplans avec un nombre de plans images disponibles correspondant au nombre de plans images maximum pour lequel le système VTH est configuré.

Le nombre de plans image disponibles est une fonction de la durée de l'appui tactile long, par exemple le nombre de plans image est proportionnel à la durée. Plus la durée de l'appui tactile est longue, plus le nombre de plans image requis est grand.

La durée de l'appui tactile long est mesurée par le calculateur en charge de contrôler l'interface tactile de l'écran tactile 13.

Le nombre, noté N, de plans image requis correspond par exemple à une sélection des N plans image les plus proches du point de vue 20 parmi le nombre total ou maximum de plans image possibles selon la configuration, l'architecture ou le type du système VTH 2.

Selon ce mode de réalisation particulier, les deuxièmes données transmises au contrôleur du système VTH 2 comprennent une information représentative de la durée de l'appui tactile lorsque l'appui tactile correspond à l'appui tactile long. Cette information correspond soit à la durée (par exemple exprimée en ms), soit directement au nombre N de multiplans associés et requis.

Dans une quatrième opération du processus, le système VTH 2 est contrôlé en fonction des deuxièmes données reçues par le contrôleur du système VTH 2, pour que ce dernier commande et contrôle la transition ou le passage depuis le mode d'affichage courant vers le mode d'affichage cible.

Selon le type et l'architecture du système VTH multiplans, le contrôle du système VTH multiplans comprend :
- une sélection d'un ou plusieurs projecteurs parmi un ensemble de projecteurs du système VTH 2 pour projeter le ou les contenus graphiques, selon que le mode d'affichage cible corresponde au mode d'affichage monoplan ou au mode d'affichage multiplans, respectivement ; et/ou
- une sélection d'un ou plusieurs miroirs parmi un ensemble de de miroirs du système VTH 2 pour recevoir un ou plusieurs faisceaux lumineux représentatifs du ou des contenus graphiques à afficher, selon que le mode d'affichage cible corresponde au mode d'affichage monoplan ou au mode d'affichage multiplans, respectivement ; et/ou
- un contrôle d'une orientation du miroir vis-à-vis du projecteur pour recevoir un ou plusieurs faisceaux lumineux représentatifs du ou des contenus graphiques à afficher, selon que le mode d'affichage cible corresponde au mode d'affichage monoplan ou au mode d'affichage multiplans, respectivement.

Un tel contrôle permet d'afficher ou projeter le ou les contenus graphiques dans le champ de vision du conducteur avec une proximité du conducteur sur un ou plusieurs plans image, selon le mode d'affichage cible choisi.

Dans une cinquième opération du processus mise en œuvre lorsque la représentation graphique du témoin 31 varie selon le mode d'affichage du système VTH, la représentation graphique du témoin 31 est contrôlé pour passer de la représentation graphique courante associée au mode d'affichage courant à la représentation graphique cible associée au mode d'affichage cible, c'est-à-dire pour que le témoin 31 s'affiche avec la représentation graphique cible. La représentation graphique courante et la représentation graphique cible appartiennent à l'ensemble de représentations graphiques comprenant une première représentation graphique associée au mode d'affichage monoplan et une deuxième représentation graphique associée au mode d'affichage multiplans.

Ce contrôle est mis en œuvre par le calculateur contrôlant l'écran tactile 13, par exemple le calculateur IVI.

Ce contrôle est déclenché par la réception des premières données. La quatrième opération et la cinquième opération sont par exemple mises en œuvre en parallèle et simultanément.

Selon une variante, ce contrôle est déclenché suivant la réception de troisièmes données représentatives d'un acquittement de réception des deuxièmes données par le contrôleur du système VTH 2 ou suivant la réception de quatrièmes données représentatives d'une confirmation (ou validation) de mise en œuvre de la transition ou passage du mode d'affichage courant vers le mode d'affichage cible par le contrôleur du système VTH 2.

Un tel changement de représentation graphique permet d'indiquer visuellement au conducteur que sa commande de transition de mode d'affichage a bien été prise en compte.

La figure 4 illustre schématiquement un dispositif 4 configuré pour contrôler un système de vision tête-haute d'un véhicule, par exemple le système VTH 2 du véhicule 10, selon des exemples de réalisation particuliers et non limitatifs de la présente invention. Le dispositif 4 correspond par exemple à un dispositif embarqué dans le véhicule 10, par exemple un calculateur. Selon une variante, le dispositif 4 correspond à un dispositif configuré pour contrôler le système d'affichage du véhicule 10, notamment l'écran tactile 13.

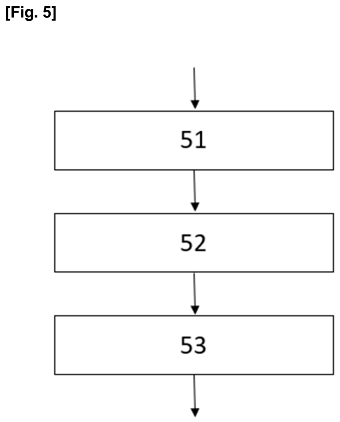

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un système de projection 440 (correspondant par exemple au projecteur 24), un élément d'entrainement 450 (correspondant par exemple au moteur électrique 25) et/ou d'autres périphériques 460 (écrans, haut-parleurs) via respectivement des interfaces de sortie 44, 45 et 46. Selon une variante, l'un ou l'autre des dispositifs externes est intégré au dispositif 4.

La figure 5 illustre un organigramme des différentes étapes d'un procédé de contrôle d'un système de vision tête-haute d'un véhicule, par exemple le système VTH 2 du véhicule 10, selon un exemple de réalisation particulier et non limitatif de la présente invention. Le système VTH est configuré pour fonctionner selon une pluralité de modes d'affichage comprenant un mode d'affichage monoplan et un mode d'affichage multiplans, le véhicule comprenant un écran tactile. Le procédé est par exemple mis en œuvre par un dispositif de contrôle embarqué dans le véhicule 10, par exemple le dispositif 4 de la figure 4.

Dans une première étape 51, l'affichage d'un témoin représentatif du système VTH est contrôlé pour afficher ce témoin sur l'écran tactile.

Dans une deuxième étape 52, des premières données représentatives d'un appui tactile sur le témoin sont reçues.

Dans une troisième étape 53, des deuxièmes données représentatives d'une commande de transition depuis un mode d'affichage courant vers un mode d'affichage cible sont transmises à destination d'un contrôleur dudit système VTH, la commande de transition étant fonction du mode d'affichage courant du système VTH, le mode d'affichage courant et le mode d'affichage cible appartenant à la pluralité de modes d'affichage, la transmission des deuxièmes données étant déclenchée par la réception des premières données.

Selon une variante, les variantes et exemples des opérations décrits en relation avec l'une des figures 1 à 3 s'appliquent aux étapes du procédé de la figure 5.

Bien entendu, la présente invention ne se limite pas aux exemples de réalisation décrits ci-avant mais s'étend à un procédé de contrôle d'affichage d'un témoin représentatif d'un système VTH qui inclurait des étapes secondaires sans pour cela sortir de la portée de la présente invention. Il en serait de même d'un dispositif configuré pour la mise en œuvre d'un tel procédé.

La présente invention concerne également un système d'affichage comprenant un écran tactile, un système VTH et le dispositif 4 de la figure 4, ainsi qu'un véhicule, par exemple automobile, comprenant le système d'affichage ou le dispositif 4 de la figure 4.

## Revendications

1. Procédé de contrôle d'un système de vision tête haute (2), dit système VTH, d'un véhicule (10), ledit système VTH (2) étant configuré pour fonctionner selon une pluralité de modes d'affichage comprenant un mode d'affichage monoplan et un mode d'affichage multiplans, ledit véhicule (10) comprenant un écran tactile (13), ledit procédé étant mis en œuvre par au moins un processeur et comprenant les étapes suivantes :
- contrôle (51) d'affichage d'un témoin (31) représentatif dudit système VTH sur ledit écran tactile (13) ;
- réception (52) de premières données représentatives d'un appui tactile (301) sur ledit témoin (31) ;
- transmission (53) de deuxièmes données représentatives d'une commande de transition depuis un mode d'affichage courant vers un mode d'affichage cible à destination d'un contrôleur dudit système VTH (2), ladite commande de transition étant fonction du mode d'affichage courant dudit système VTH (2), ledit mode d'affichage courant et ledit mode d'affichage cible appartenant à ladite pluralité de modes d'affichage, la transmission desdites deuxièmes données étant déclenchée par la réception desdites premières données.

2. Procédé selon la revendication 1, pour lequel ledit mode d'affichage cible correspond au mode d'affichage multiplans lorsque ledit mode d'affichage courant correspond audit mode d'affichage monoplan, et ledit mode d'affichage cible correspond au mode d'affichage monoplan lorsque ledit mode d'affichage courant correspond audit mode d'affichage multiplans.

3. Procédé selon la revendication 1 ou 2, pour lequel ledit appui tactile (301) correspond à un appui tactile d'une durée inférieure à un seuil, dit appui tactile court, ou à un appui tactile d'une durée supérieure audit seuil, dit appui tactile long, lesdites deuxièmes données comprenant une information représentative de la durée de l'appui tactile (301) lorsque l'appui tactile (301) correspond audit appui tactile long.

4. Procédé selon l'une des revendications 1 à 3, comprenant en outre une étape de contrôle dudit système VTH (2) en fonction des deuxièmes données pour passer du mode d'affichage courant au mode d'affichage cible.

5. Procédé selon la revendication 4 en dépendance de la revendication 3, pour lequel le contrôle dudit système VTH (2) comprend un contrôle d'un nombre de plans image disponibles en mode d'affichage multiplans lorsque le mode d'affichage courant correspond audit mode d'affichage monoplan et ledit mode d'affichage cible correspond audit mode d'affichage multiplans et lorsque ledit appui tactile correspond audit appui tactile long, ledit nombre de plans image disponibles étant fonction de ladite information représentative de la durée de l'appui tactile (301).

6. Procédé selon l'une des revendications 1 à 5, comprenant en outre une étape de contrôle d'une représentation graphique dudit témoin (31) déclenchée par la réception (52) desdites premières données pour passer d'une représentation graphique courante associée au mode d'affichage courant à une représentation graphique cible associée au mode d'affichage cible, la représentation graphique courante et la représentation graphique cible appartenant à un ensemble de représentations graphiques comprenant une première représentation graphique associée au mode d'affichage monoplan et une deuxième représentation graphique associée au mode d'affichage multiplans.

7. Programme d'ordinateur comportant des instructions pour la mise en œuvre du procédé selon l'une quelconque des revendications 1 à 6, lorsque ces instructions sont exécutées par au moins un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (4) de contrôle d'un système de vision tête haute (2) d'un véhicule (10), ledit dispositif (4) comprenant une mémoire (41) associée à au moins un processeur (40) configuré pour la mise en œuvre des étapes du procédé selon l'une quelconque des revendications 1 à 6.

10. Véhicule (10) comprenant le dispositif (4) selon la revendication 9.
